(19) Europäisches Patentamt / European Patent Office / Office européen des brevets

(11) **EP 2 587 795 A2**

(12) **EUROPEAN PATENT APPLICATION**

(43) Date of publication:
**01.05.2013 Bulletin 2013/18**

(51) Int Cl.:
**H04N 5/367** (2011.01)

(21) Application number: **12189405.9**

(22) Date of filing: **22.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.10.2011 JP 2011233630**

(71) Applicant: **Sumitomo Electric Industries, Ltd.
Osaka-shi,
Osaka 541 (JP)**

(72) Inventors:
• **Eiichiro, Yamada
Kanagawa (JP)**
• **Tatsuhiko, Saitoh
Kanagawa (JP)**

(74) Representative: **HOFFMANN EITLE
Patent- und Rechtsanwälte
Arabellastrasse 4
81925 München (DE)**

(54) **Imaging apparatus and imaging method**

(57)    An imaging apparatus includes a control unit, an imaging device, a memory, and a correction unit. The memory stores information for specifying a pixel as a defect pixel among the arrayed pixels if a variation in image data of the pixel in a period is a predetermined value or larger, the image data of each pixel being output from the imaging device when light with a constant first light-quantity level is incident on each pixel of the imaging device for the period. The correction unit obtains data for the defect pixel based on image data of a good pixel that is adjacent to the defect pixel among the arrayed pixels.

FIG. 1

**Description**

BACKGROUND OF THE INVENTION

Field of the Invention

The present invention relates to an imaging apparatus and an imaging method.

Description of the Related Art

An imaging apparatus includes an imaging device that has a plurality of two-dimensionally arrayed pixels and outputs image data of each pixel. In such an imaging apparatus, one of the plurality of pixels in the imaging device may be a defect pixel that outputs abnormal image data. JP2007-124056A describes execution of processing in which information for specifying a defect pixel is stored in a memory of an imaging apparatus, and in a step when the imaging apparatus is used, image data of a good pixel adjacent to the defect pixel stored in the memory is interpolated, and the interpolated image data is used as image data for the defect pixel. The defect pixel is found by inspecting the imaging device in a step when the imaging apparatus is shipped from a factory. Since such processing is executed, deterioration in image quality caused by the defect pixel is reduced.

SUMMARY OF THE INVENTION

An object of the present invention is to provide an imaging apparatus and an imaging method that can further reliably correct a value of image data of a defect pixel in an imaging device.

An imaging apparatus according to an aspect of the present invention includes (1) an imaging device that has a plurality of two-dimensionally arrayed pixels and outputs image data of each pixel; (2) a memory that stores information for specifying a pixel among the arrayed pixels as a defect pixel, the pixel outputting image data having a variation equal to or larger than a predetermined value in a first period while light with a constant first light-quantity level is incident on each pixel of the imaging device; and (3) a correction unit that obtains data for the defect pixel based on image data of a good pixel that is adjacent to the defect pixel. The "variation in image data in a specified period" represents a "difference between a maximum value and a minimum value of image data in a specified period," or a "standard deviation of image data in a specified period."

According to another aspect of the present invention, there is provided a method of imaging an object with an imaging apparatus including an imaging device that has a plurality of two-dimensionally arrayed pixels and outputs image data of each pixel. The method includes (1) specifying a pixel among the arrayed pixels as a defect pixel, the pixel outputting image data having a variation equal to or larger than a predetermined value in a first period while light with a constant first light-quantity level is incident on each pixel of the imaging device; (2) imaging the object with the imaging device; and (3) obtaining data for the defect pixel based on image data of a good pixel that is adjacent to the defect pixel.

With the aspects of the present invention, the value of the image data of the defect pixel in the imaging device can be further reliably corrected.

BRIEF DESCRIPTION OF THE DRAWINGS

Figure 1 is a block diagram showing an inspection system including an imaging apparatus according to an embodiment of the present invention and an inspection apparatus.
Figure 2 is a block diagram showing the imaging apparatus in Fig. 1.
Figure 3 is a flowchart explaining an imaging method according to an embodiment of the present invention.
Figure 4 is a flowchart explaining a method for identifying a defect pixel by an identification unit for defect pixel.
Figure 5 is a conceptual diagram showing 3x3 pixels among a plurality of pixels in an imaging device.
Figure 6 is a conceptual diagram showing a line-sensor hyperspectral imaging apparatus.

DESCRIPTION OF THE PREFERRED EMBODIMENTS

Embodiments of the present invention are described below with reference to the figures. The figures are provided for description, and do not intend to limit the scope of the invention. In the figures, the identical reference signs indicate the same parts to avoid redundant description. The ratios of dimensions illustrated in the figures may not be correct.
There has been a defect pixel outputting a value of time-varying image data even under the same exposure condition. The inventor has found that such a defect pixel might be missed by a conventional method of specifying a defect pixel. The present invention is made to address the concern.

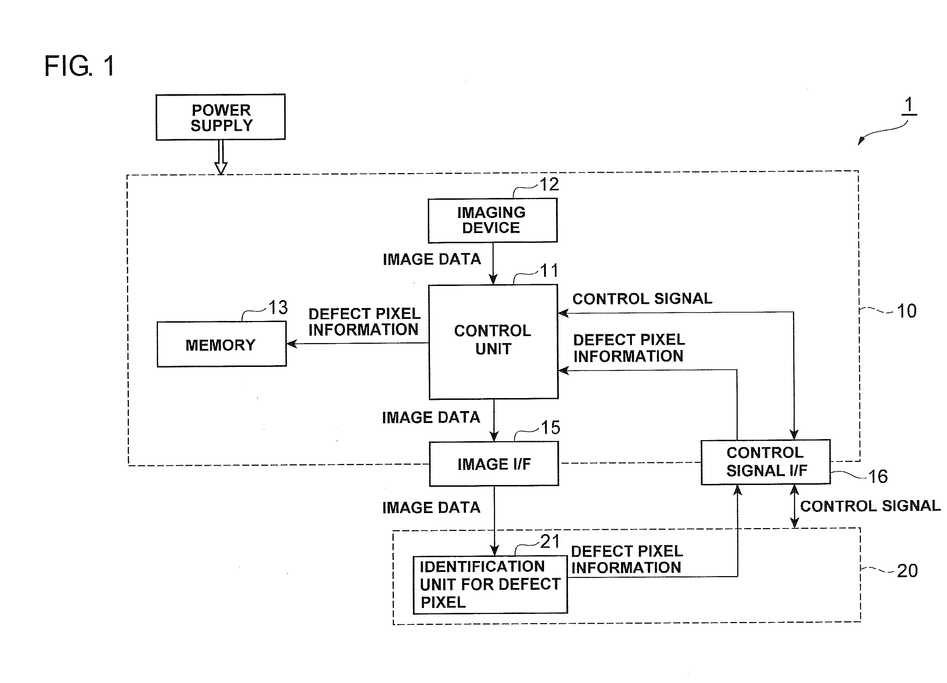

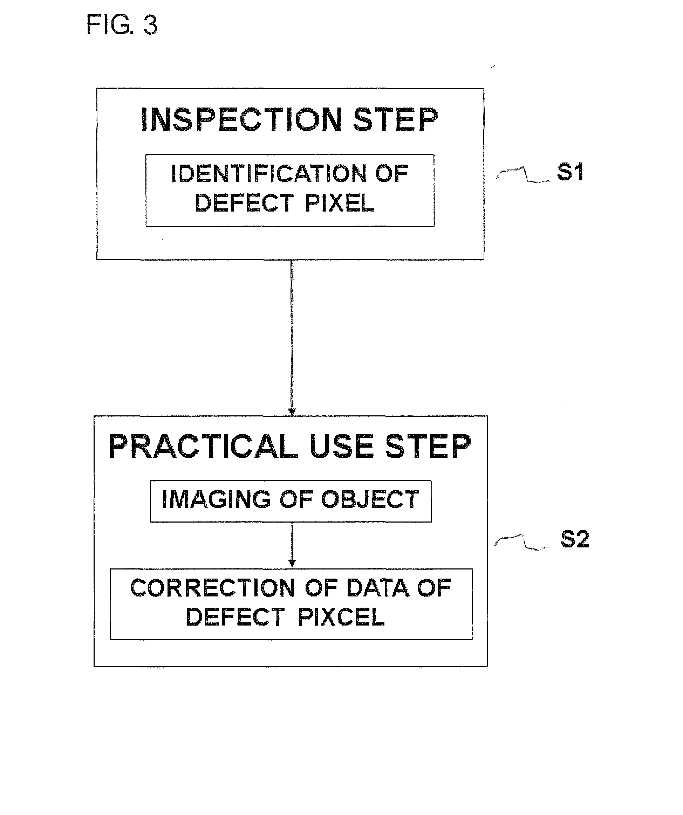

Figure 1 is a block diagram showing an inspection system 1 including an imaging apparatus 10 according to an embodiment of the present invention and an inspection apparatus 20. Figure 1 shows a configuration when an imaging device 12 of the imaging apparatus 10 is inspected (an inspection step S1) when the imaging apparatus 10 is shipped from a factory. Figure 3 is a flowchart explaining an imaging method according to an embodiment of the present invention. The imaging apparatus 10 includes a control unit 11, an imaging device 12, a memory 13, a correction unit 14, an image interface 15, and a control signal interface 16. Also, the inspection apparatus 20 includes an identification unit 21 for defect pixel.

In the inspection step S1, the control unit 11 of the imaging apparatus 10 receives image data of each pixel output from the imaging device 12 having a plurality of two-dimensionally arrayed pixels, and outputs the image data of each pixel to the image interface 15. The image interface 15 outputs the image data of each pixel received from the control unit 11 to the identification unit 21 of the inspection apparatus 20.

The identification unit 21 identifies whether or not the imaging device 12 is normal or defective based on the image data of each pixel received from the image interface 15, and outputs defect pixel information for identifying a defect pixel to the control signal interface 16. The control signal interface 16 gives the control unit 11 the defect pixel information received from the identification unit 21. The control unit 11 stores the defect pixel information in the memory 13.

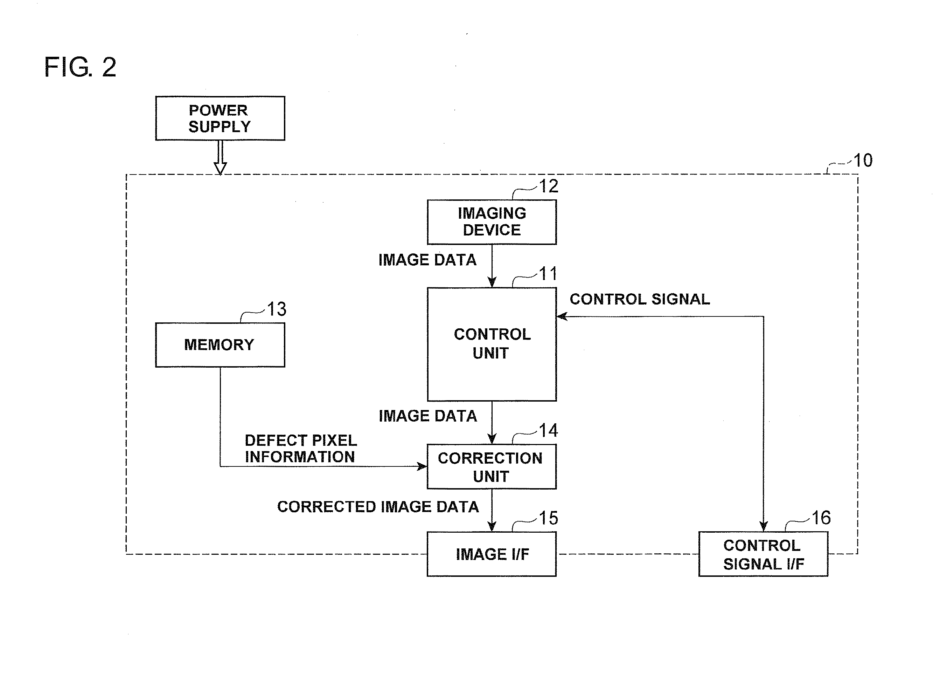

Figure 2 is a block diagram showing the imaging apparatus 10, and shows a configuration when the imaging apparatus 10 is used (a practical use step S2). In the practical use step S2, the memory 13 which is non-volatile previously stores information for specifying a defect pixel among the plurality of pixels in the imaging device 12. The control unit 11 receives a control signal input from an external device through the control signal interface 16, and is operated based on the control signal. The control unit 11 receives the image data of each pixel output from the imaging device 12, and outputs the image data of each pixel to the correction unit 14.

The correction unit 14 receives the image data of each pixel output from the imaging device 12, from the control unit 11, and also receives information for specifying a defect pixel of the imaging device 12 from the memory 13. The correction unit 14 obtains data for the defect pixel based on the image data of a good pixel adjacent to the defect pixel, among image data of each pixel output from the imaging device 12. Then the correction unit 14 outputs the obtained data for the defect pixel and the image data of the good pixel to an external device through the image interface 15.

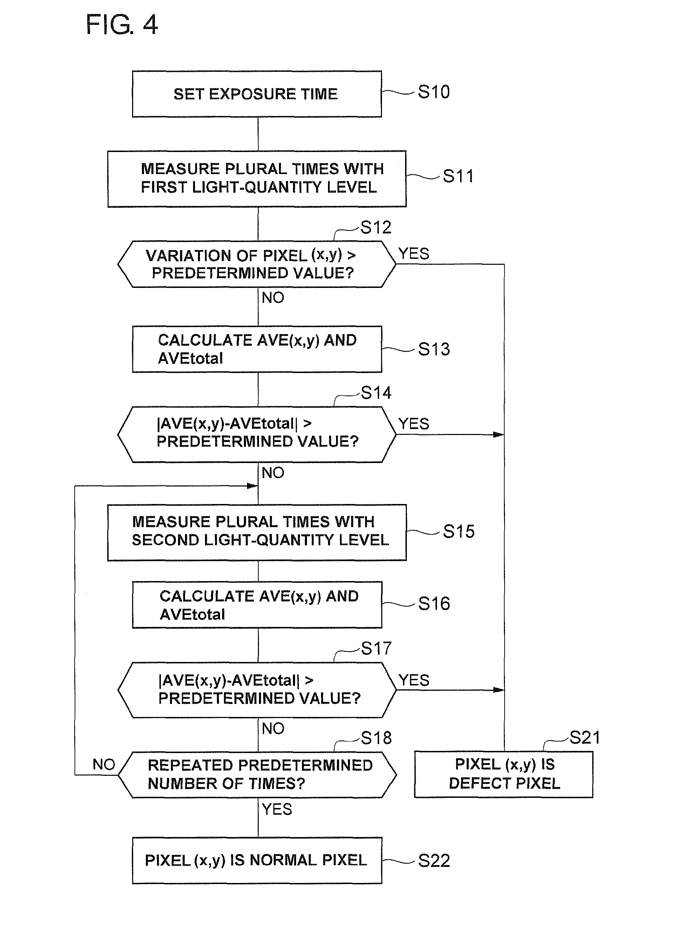

Next, the method for identifying a defect pixel by the identification unit 21 for defect pixel of the inspection apparatus 20 is described, and also the defect pixel information stored in the memory 13 of the imaging apparatus 10 is described. Figure 4 is a flowchart explaining the method for identifying a defect pixel by the identification unit 21.

In step S10, an exposure time of the imaging device 12 is set to a predetermined time (for example, 1 to 9 ms). In step S11, light with a first light-quantity level is incident on each pixel of the imaging device 12 a plurality of times (for example, 100 times) for the exposure time set within a predetermined time (for example, 60 seconds). At this time, the control unit 11 acquires image data of each pixel output from the imaging device 12, and gives the identification unit 21 the acquired image data. The first light-quantity level at this time may be a completely light shielding level. In step S12, the identification unit 21 calculates the difference between a maximum value and a minimum value (a variation) of the image data of each pixel. If the variation is a predetermined value (for example, 200 counts) or larger, it is identified that the pixel (x, y) is a defect pixel and hence the defect pixel (x, y) is specified in step S21.

In step S13, the identification unit 21 obtains an average value (AVEtotal) of image data of all pixels and an average value (AVE (x, y)) of image data of each pixel (x, y). In step S 14, the identification unit 21 identifies that the pixel (x, y) is a defect pixel if the average value (AVE (x, y)) of a certain pixel (x, y) is different from the average value (AVEtotal) of all pixels by a predetermined value (for example, 4σ counts) or larger. Thus, the defect pixel (x, y) is specified in step S21.

In step S 15, light with a second light-quantity level is incident on each pixel of the imaging device 12 a plurality of times (for example, 100 times) for the set exposure time. At this time, the control unit 11 acquires image data of each pixel output from the imaging device 12, and gives the identification unit 21 the acquired image data. The second light-quantity level at this time is different from the first light-quantity level. In step S16, the identification unit 21 obtains an average value (AVEtotal) of image data of all pixels acquired in step S15, and an average value (AVE (x, y)) of image data of each pixel (x, y). In step S17, the identification unit 21 identifies that the pixel (x, y) is a defect pixel if the average value (AVE (x, y)) of a certain pixel (x, y) is different from the average value (AVEtotal) of all pixels by a predetermined value (for example, 4σ counts) or larger. Thus, the defect pixel (x, y) is specified in step S21.

In step S18, it is determined whether or not the processing in steps S15 to S17 is repeated a predetermined number of times. If the number of times the processing is repeated does not reach the predetermined number of times, the light-quantity level is set to another level, and the processing in steps S15 to S17 is further performed. If the number of times the processing is repeated reaches the predetermined number of times, the processing goes to step S22. In step S22, other pixels that are not identified as defect pixels in step S21 are designated as normal pixels. The memory 13 of the imaging apparatus 10 stores information of the defect pixel specified in step S21. In this embodiment, the defect pixel is specified and the defect pixel information is stored in the memory 13 in this way. Accordingly, the value of the image data of the defect pixel of the imaging device 12 can be further reliably corrected.

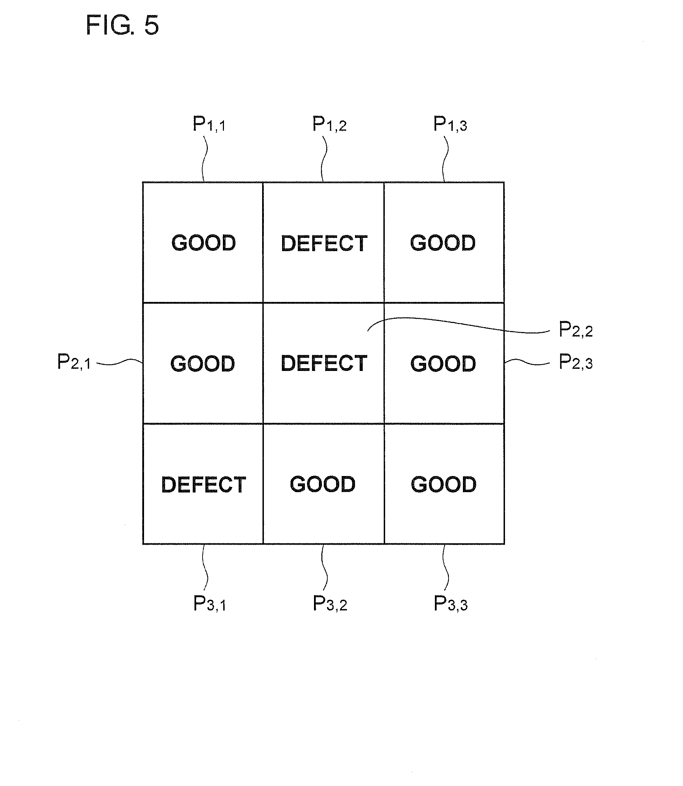

Next, a method of correcting data of a defect pixel by the correction unit 14 of the inspection apparatus 20 is described. Figure 5 is a conceptual diagram showing 3x3 pixels among a plurality of pixels in the imaging device 12. It is assumed that pixels $P_{1,2}$, $P_{2,2}$, and $P_{3,1}$ are defect pixels (in the figure, indicated by defect) among 3x3 pixels $P_{1,1}$ to $P_{3,3}$, and other pixels are good pixels (in the figure, indicated by good). With this assumption, the method of correcting data of the defect pixel $P_{2,2}$ located at the center is described. Also, it is assumed that $D_{x,y}$ represents data of a pixel $P_{x,y}$.

In a first correction method by the correction unit 14, data $D_{2,2}$ for the defect pixel $P_{2,2}$ is obtained, as an average value of data of all good pixels that are adjacent to the defect pixel $P_{2,2}$ in up-down, left-right, or oblique direction. In particular, in the first correction method, the data $D_{2,2}$ for the defect pixel $P_{2,2}$ is obtained by Eq. 1 as follows:

$$D_{2,2} = (D_{1,1} + D_{1,3} + D_{2,1} + D_{2,3} + D_{3,2} + D_{3,3})/6 \quad \text{... Equation 1.}$$

In a second correction method by the correction unit 14, data $D_{2,2}$ for the defect pixel $P_{2,2}$ is obtained, as an average value of data of good pixels that are adjacent to the defect pixel $P_{2,2}$ in the up-down, left-right, or oblique direction and that sandwich the defect pixel $P_{2,2}$. In particular, in the second correction method, the data $D_{2,2}$ for the defect pixel $P_{2,2}$ is obtained by Eq. 2 as follows:

$$D_{2,2} = (D_{1,1} + D_{2,1} + D_{2,3} + D_{3,3})/4 \quad \text{... Equation 2.}$$

In a third correction method by the correction unit 14, data $D_{2,2}$ for the defect pixel $P_{2,2}$ is obtained, as an average value of data of each good pixels that are adjacent to the defect pixel $P_{2,2}$ in the left-right direction. In particular, in the third correction method, the data $D_{2,2}$ for the defect pixel $P_{2,2}$ is obtained by Eq. 3 as follows:

$$D_{2,2} = (D_{2,1} + D_{2,3})/2 \quad . \quad \text{.. Equation 3.}$$

In a fourth correction method by the correction unit 14, data $D_{2,2}$ for the defect pixel $P_{2,2}$ is obtained, as an average value of data of each good pixels that are adjacent to the defect pixel $P_{2,2}$ in the up-down direction. In particular, in the fourth correction method, the data $D_{2,2}$ for the defect pixel $P_{2,2}$ is obtained by Eq. 4 as follows:

$$D_{2,2} = D_{3,2} \quad . \quad \text{.. Equation 4.}$$

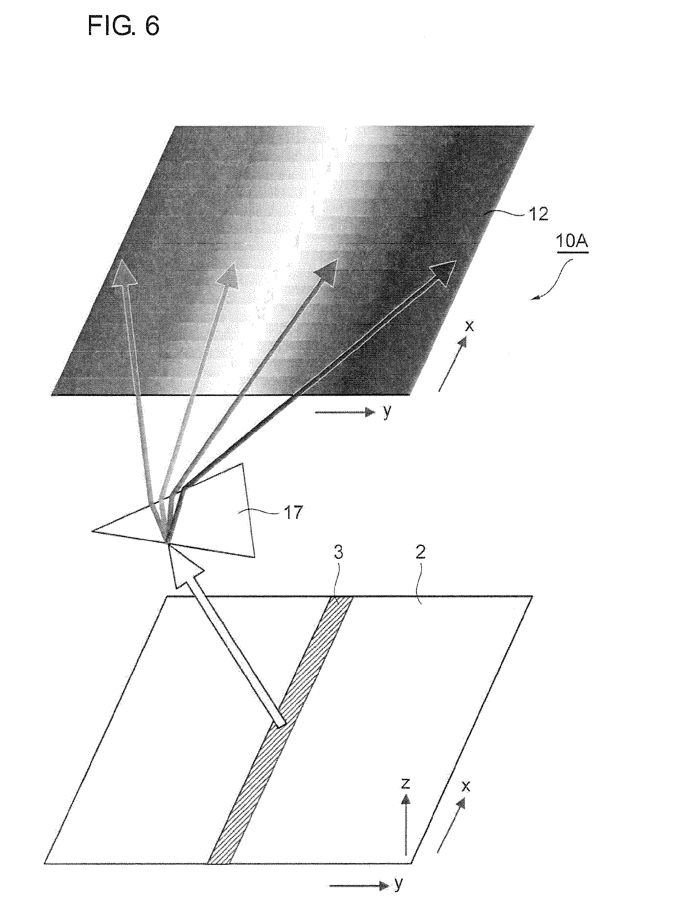

The third and fourth correction methods are preferable if the imaging apparatus 10 is a line-sensor hyperspectral imaging apparatus. Figure 6 is a conceptual diagram showing a line-sensor hyperspectral imaging apparatus 10A. The line-sensor hyperspectral imaging apparatus 10A includes a spectroscope 17 in addition to the configuration of the imaging apparatus 10.

The spectroscope 17 receives light emitted from a region 3 in the field in view, which has a stripe shape and is provided at a certain position in the y direction and extends in the x direction on the surface of a measurement object 2. The spectroscope 17 disperses the light, and causes the dispersed light to be incident on an imaging surface of the imaging device 12. The imaging device 12 has, for example, 320 pixels in the x direction and 237 pixels in the y direction. A position in the x direction on the imaging surface of the imaging device 12 corresponds to a position in the x direction in the region 3 in the field of view. A position in the y direction on the imaging surface of the imaging device 12 corresponds to a wavelength. When the measurement object 2 moves in the y direction, the line-sensor hyperspectral imaging apparatus 10A can measure the spectrum on light emitted from each position of the surface of the measurement object 2.

In such a line-sensor hyperspectral imaging apparatus 10A, if the third correction method of obtaining the data for the defect pixel as the average value of the data of the good pixels that are adjacent to the defect pixel in the x direction is employed, reduction in wavelength resolution can be restricted. Also, if the fourth correction method of obtaining the data for the defect image as the average value of the data of the good pixels that are adjacent to the defect pixel in the y direction is employed, reduction in positional resolution can be restricted.

**Claims**

1. An imaging apparatus, comprising:

   an imaging device that has a plurality of two-dimensionally arrayed pixels and outputs image data of each pixel;
   a memory that stores information for specifying a pixel among the arrayed pixels as a defect pixel, the pixel outputting image data having a variation equal to or larger than a predetermined value in a first period while light with a constant first light-quantity level is incident on each pixel of the imaging device; and
   a correction unit that obtains data for the defect pixel based on image data of a good pixel that is adjacent to the defect pixel.

2. The imaging apparatus according to claim 1, wherein
   the memory stores information for specifying a pixel as a defect pixel, the pixel outputting image data having an average value in the first period different from an average value of image data of all the arrayed pixels in the first period by a predetermined value or larger.

3. The imaging apparatus according to claim 1, wherein
   the memory stores information for specifying a pixel as a defect pixel, the pixel outputting image data having an average value in a second period while light with a constant second light-quantity level, which is different from the first light-quantity level, is incident on each pixel of the imaging device different from an average value of image data of all the arrayed pixels in the second period by a predetermined value or larger.

4. The imaging apparatus according to claim 1, wherein
   the correction unit uses an average value of image data of all good pixels that are adjacent to the defect pixel among the arrayed pixels, as the data for the defect pixel.

5. The imaging apparatus according to claim 1, wherein
   the correction unit uses an average value of image data of good pixels that are adjacent to the defect pixel and sandwich the defect pixel among the arrayed pixels, as the data for the defect pixel.

6. The imaging apparatus according to claim 1, wherein
   the correction unit uses an average value of image data of good pixels that are adjacent to the defect pixel in a left-right direction among the arrayed pixels, as the data for the defect pixel.

7. The imaging apparatus according to claim 1, wherein
   the correction unit uses an average value of image data of good pixels that are adjacent to the defect pixel in an up-down direction among the arrayed pixels, as the data for the defect pixel.

8. A method of imaging an object with an imaging apparatus including an imaging device that has a plurality of two-dimensionally arrayed pixels and outputs image data of each pixel, the method comprising:

   specifying a pixel as a defect pixel among the arrayed pixels, the pixel outputting image data having a variation equal to or larger than a predetermined value in a first period while light with a constant first light-quantity level is incident on each pixel of the imaging device;
   imaging the object with the imaging device; and
   obtaining data for the defect pixel based on image data of good pixels that are adjacent to the defect pixel among the arrayed pixels.

9. The imaging method according to claim 8, wherein
   the specifying step includes specifying a pixel as a defect pixel, the pixel outputting image data having an average value in the first period different from an average value of image data of all the arrayed pixels in the first period by a predetermined value or larger.

10. The imaging method according to claim 8, wherein
    the specifying step includes specifying a pixel as a defect pixel, the pixel outputting image data having an average value in a second period while light with a constant second light-quantity level, which is different from the first light-quantity level, is incident on each pixel of the imaging device different from an average value of image data of all the arrayed pixels in the second period by a predetermined value or larger.

**11.** The imaging method according to claim 8, wherein
the image data of the good pixel is an average value of image data of all good pixels that are adjacent to the defect pixel.

**12.** The imaging method according to claim 8, wherein
the image data of the good pixel is an average value of image data of good pixels that are adjacent to the defect pixel and sandwich the defect pixel.

**13.** The imaging method according to claim 8, wherein
the image data of the good pixel is an average value of image data of good pixels that are adjacent to the defect pixel in a left-right direction.

**14.** The imaging method according to claim 8, wherein
the image data of the good pixel is an average value of image data of good pixels that are adjacent to the defect pixel in an up-down direction.

FIG. 1

FIG. 2

POWER
SUPPLY

┌─────────────────────────────────────────────────────────────────── 10
│
│                                    IMAGING          12
│                                    DEVICE
│
│                                  IMAGE DATA
│                                              11
│                13                                    CONTROL SIGNAL
│        MEMORY                      CONTROL
│                                    UNIT
│
│                                  IMAGE DATA
│        DEFECT PIXEL                          14
│        INFORMATION                 CORRECTION
│                                    UNIT
│
│                            CORRECTED IMAGE DATA
│                                              15                      16
│                                    IMAGE I/F            CONTROL
│                                                         SIGNAL I/F
└───────────────────────────────────────────────────────────────────

EP 2 587 795 A2

FIG. 3

```
┌─────────────────────────────────┐
│      INSPECTION STEP            │
│   ┌─────────────────────────┐   │        ┌─ S1
│   │   IDENTIFICATION OF     │   │
│   │   DEFECT PIXEL          │   │
│   └─────────────────────────┘   │
└─────────────────────────────────┘
                │
                ▼
┌─────────────────────────────────┐
│    PRACTICAL USE STEP          │
│   ┌─────────────────────────┐   │
│   │   IMAGING OF OBJECT     │   │        ┌─ S2
│   └─────────────────────────┘   │
│                │                 │
│                ▼                 │
│   ┌─────────────────────────┐   │
│   │  CORRECTION OF DATA OF  │   │
│   │  DEFECT PIXCEL          │   │
│   └─────────────────────────┘   │
└─────────────────────────────────┘
```

## FIG. 4

SET EXPOSURE TIME — S10

MEASURE PLURAL TIMES WITH FIRST LIGHT-QUANTITY LEVEL — S11

S12 — VARIATION OF PIXEL (x,y) > PREDETERMINED VALUE? — YES

NO

CALCULATE AVE(x,y) AND AVEtotal — S13

S14 — |AVE(x,y)-AVEtotal| > PREDETERMINED VALUE? — YES

NO

MEASURE PLURAL TIMES WITH SECOND LIGHT-QUANTITY LEVEL — S15

CALCULATE AVE(x,y) AND AVEtotal — S16

S17 — |AVE(x,y)-AVEtotal| > PREDETERMINED VALUE? — YES

NO

S18 — NO — REPEATED PREDETERMINED NUMBER OF TIMES?

S21 — PIXEL (x,y) IS DEFECT PIXEL

YES

PIXEL (x,y) IS NORMAL PIXEL — S22

## FIG. 5

| $P_{1,1}$ | $P_{1,2}$ | $P_{1,3}$ |
|-----------|-----------|-----------|
| GOOD | DEFECT | GOOD |
| GOOD | DEFECT | GOOD |
| DEFECT | GOOD | GOOD |

$P_{2,1}$     $P_{2,2}$     $P_{2,3}$

$P_{3,1}$     $P_{3,2}$     $P_{3,3}$

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007124056 A